# EUROPÄISCHE PATENTSCHRIFT

(11) **EP 2 299 042 B1**
(45) Veröffentlichungstag und Bekanntmachung des Hinweises auf die Patenterteilung: **07.09.2016**
(21) Anmeldenummer: 10004836.2
(22) Anmeldetag: 07.05.2010
(51) Int. Cl.: E06B 3/267, B29C 39/22, B29C 70/84, B29C 39/18

(54) **Gießanlage für thermisch getrennte Metallprofile**
Casting assembly for thermally separated metal profiles
Système de coulage pour profilés métalliques thermiquement séparés

(30) Priorität: 10.09.2009 DE 202009012330 U
(43) Veröffentlichungstag der Anmeldung: 23.03.2011
(73) Patentinhaber: Gebhardt-Stahl GmbH, 59457 Werl (DE)
(72) Erfinder: Hesse, Martin, 33142 Büren (DE); Gebhardt, Manfred, 59494 Soest (DE)
(74) Vertreter: Meinke, Dabringhaus und Partner GbR

(56) Entgegenhaltungen:
- EP-A2- 0 517 027
- DE-A1- 2 160 253
- DE-A1- 2 623 995
- US-A- 3 832 818

## Beschreibung

Die Erfindung betrifft eine Gießanlage für thermisch getrennte Metallprofile mit einer Einzel-Metallprofile zueinander führenden Einrichtung sowie eine die Einzel-Metallprofile auf Abstand zueinander fördernden und mit wenigstens einer Kunststoffextruderdüse ausgerüsteten Kunststoffgießanlage mit anschließender Auslauf- und Abkühlstrecke, wie eine solche in DE 10 2008 063 938 A1 der Anmelderin oder EP 0 517 027 A2 beschrieben ist.

Thermisch getrennte Profile sind in unterschiedlichen Gestaltungen bekannt. So beispielsweise aus der DD 201 655 A, DE 100 33 861 A, DE 20 2004 017 181 U, DE 29 41 354 A oder der DE 26 23 995 A, um nur einige Beispiele zu nennen.

Aus diesen Literaturstellen ist zum Teil bekannt, zunächst über Stege verbundene Profile mit einer Kunststoffeinlage im Bereich des Steges durch Einspritzen des Kunststoffes und Aushärten herzustellen, wobei dann der Steg, der für sich eine thermische Brücke bildet, entfernt wird. Auch ist es bekannt, fertige Kunststoffelemente zwischen zwei Metallprofilen einzuclipsen, um die thermische Trennung zu bewirken. Das Ausgießen z.B. mit Schaum von Profilhohlräumen zeigt die US 3 832 818 A oder die DE 21 60 253 A1. Das Verbinden zweier Einzel-Metallprofile mittels Ultraschallschweißung von Kunststoffbändern ist aus DE 26 23 995 A1 bekannt.

DE 10 2008 063 938 A1 ist das Grundprinzip einer entsprechenden zum Einsatz kommenden Gießanlage dargestellt.

Aufgabe der Erfindung ist es, die Einsatzfähigkeit und Variabilität einer derartigen Gießanlage zu erhöhen und zusätzlich zu verbessern.

Mit einer Gießanlage der eingangs bezeichneten Art wird diese Aufgabe gemäß der Erfindung durch wenigstens eine die Einzel-Metallprofile in der Gießposition haltenden Führungsrollen und Führungslineale aufweisenden, der Kunststoffgießeinrichtung nachgeordneten Profilführung gelöst.

Es hat sich gezeigt, dass die Führung der Profile die es über die Gießanlage, zu verbinden gilt, besonders wichtig ist, um eine hohe Maßhaltigkeit und Genauigkeit der entstehenden Kombinationsprofile aus Metall und Kunststoff zu erreichen.

Ausgestaltungen der Erfindung ergeben sich aus den Unteransprüchen. Hierbei ist vorgesehen, dass eine Profilführung auch vor der Kunststoffgießeinrichtung positioniert ist, so dass sowohl der Ein- wie auch der Auslauf der Kunststoffgießeinrichtung für eine genaue Metallprofilposition sorgt.

Nach der Erfindung kann auch vorgesehen sein, dass die Profilführung mit Halteportalen ausgerüstet ist, die die Führungslineale einstellbar und die die Führungsrollen aufweisenden Rollenlager verstellbar tragen.

Da von der derartigen Gießanlage die unterschiedlichsten Profile erzeugbar sein sollen, ist es vorteilhaft, die entsprechenden Führungen einstellbar und ggf. austauschbar zu gestalten, hierzu sieht die Erfindung auch vor, dass die Rollenlager auswechselbar und über Führungsschlitten in ihrer Position einstellbar an den Portalen befestigt sind.

Um zu verhindern, dass bei Applikationen des Kunststoffes zwischen die Metallprofile dieser Verbund an den Fördermitteln haftet, ist nach der Erfindung auch vorgesehen, dass wenigstens das der Kunststoffzuführung zugeordnete Profil-Förderband mit einer kunststoffabweisenden Oberfläche ausgerüstet ist.

Da nicht sichergestellt werden kann, dass alle Kunststoffe die zum Einsatz kommen, von der Wandoberfläche problemlos abgehoben werden können, ist in weiterer Ausgestaltung der Erfindung vorgesehen, dass in Förderrichtung der Profile vor der Kunststoffgießanlage im Bereich des Einlaufens in das zugeordnete Förderband eine Zuführeinrichtung für ein Klebeband zur Abdichtung der Profilunterseite vorgesehen ist.

Um einigen der Kunststoffe, die es zu verarbeiten gilt gerecht zu werden, kann vorgesehen sein, dass vor dem Einlauf in die Kunststoffgießanlage Heizelemente, z.B. ein Heiztunnel vorgesehen ist. Durch deratige Heizelemente ist es möglich, die zu verbindenden Metallprofile vorzuwärmen, z.B. auf 40°C, um so die Verarbeitung des eingesetzten Kunststoffes zu erleichtern.

Eine besondere Ausgestaltung der Erfindung besteht darin, dass die Führungslineale und/oder die Führungsrollen den unterschiedlichen Profilgestaltungen in Position und Geometrie angepasst sind.

Weitere Merkmale, Einzelheiten und Vorteile der Erfindung ergeben sich aufgrund der nachfolgenden Beschreibung sowie anhang der Zeichnung, diese zeigt in
- Fig. 1: eine räumliche Darstellung der gesamten Gießanlage,
- Fig. 2: eine vergrößerte dreidimensionale Teilansicht der Anlage im Bereich der Kunststoffextruderdüse,
- Fig. 3: einen Querschnitt im Bereich der Führungsrollen mit Führungslinealen hinter der Kunststoffgießeinrichtung,
- Fig. 4: ein abgewandeltes Ausführungsbeispiel der Erfindung etwa in der Darstellung der Fig. 2,
- Fig. 5: die räumliche Darstellung einer Profilführung des abgewandelten Ausführungsbeispieles sowie in
- Fig. 6: einen Querschnitt etwa gemäß Linie VI-VI in Fig. 4.

Die allgemein mit 1 bezeichnete Gießanlage dient zur Erzeugung von thermisch getrennten Metallprofilen, wie sie beispielsweise bei Fenstern, Fassaden, Wintergärten oder dergleichen zum Einsatz kommen.

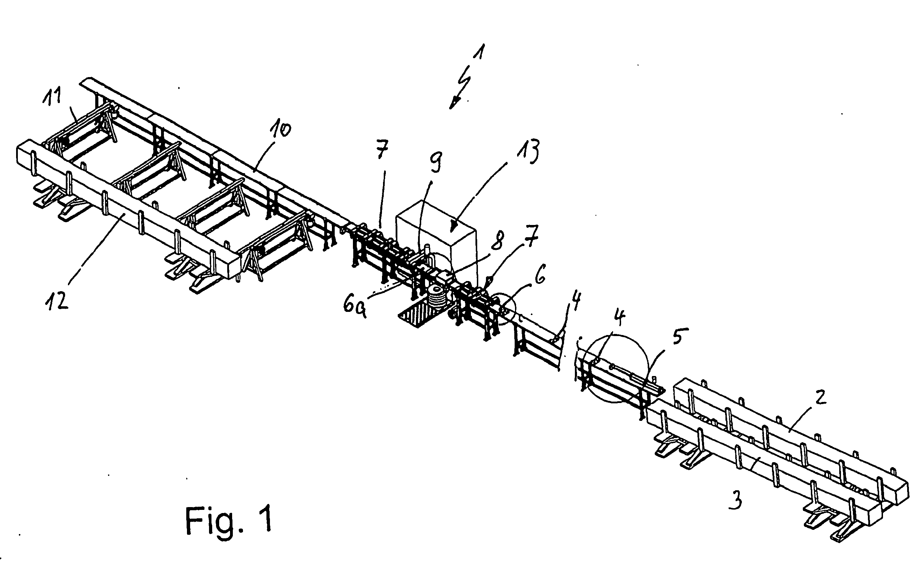

Das thermisch getrennte Metallprofil wird in der Regel aus zwei ggf. umschlagssymmetrischen Metallprofilen gebildet, die beispielsweise im Wege der Kaltverformung erzeugt worden sind. Die die Einzelprofile aufweisenden Magazine der Gießanlage 1 sind in Fig. 1 mit 2 und 3 bezeichnet. Im weiteren Förderweg sind verstellbare Linealschlitten 4 vorgesehen, durch die die Metallprofile z.B. mittels eines pneumatischen Schiebers 5 geschoben werden, um dann von einem ersten Transportriemen 6 erfasst zu werden, der das Paar von Metallprofilen in eine mit Führungsrollen und Führungslinealen ausgerüstete erste Profilführung 7 einbringt.

Die so gehaltenen und geführten Profile werden dann ggf. durch einen Heiztunnel 8 dem mit 9 bezeichneten Gießkopf zugeführt, an den sich im Förderweg der Profile ein zweites Förderband 6a, das mit einer zweiten Profilführung 7 ausgestattet ist, anschließt, wobei die Profile auf diesem ggf. beschichteten Förderband 6a weitergefördert werden, und zwar auf einen mit 10 bezeichneten Auslauftisch.

Über Querförderer 11 werden die dann fertig gebildeten Profile mit einem weiteren Magazin 12 oder einer Verpackungseinrichtung oder dergleichen gefördert.

Die notwendige Kunststoffdosier- und Mischanlage sowie die elektronische Steuerung aller Verfahrensvorgänge sind in einem nur angedeutenden Schrank 13 untergebracht, der im dargestellten Beispiel neben dem Gießkopf 9 angeordnet ist, wobei der Gießkopf 9 aus einer entsprechenden Kunststoffmischanlage beschickt wird.

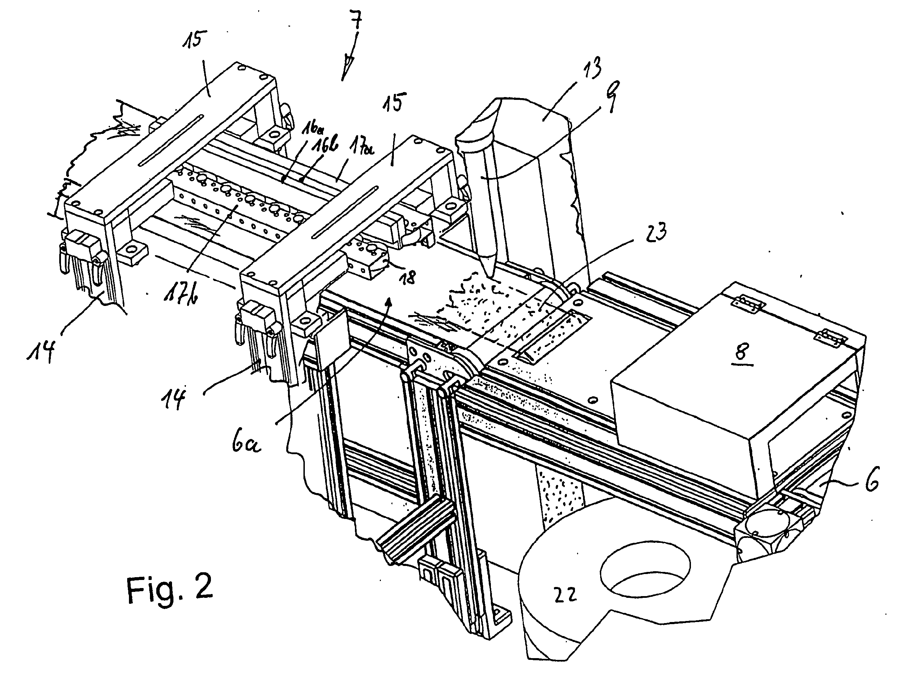

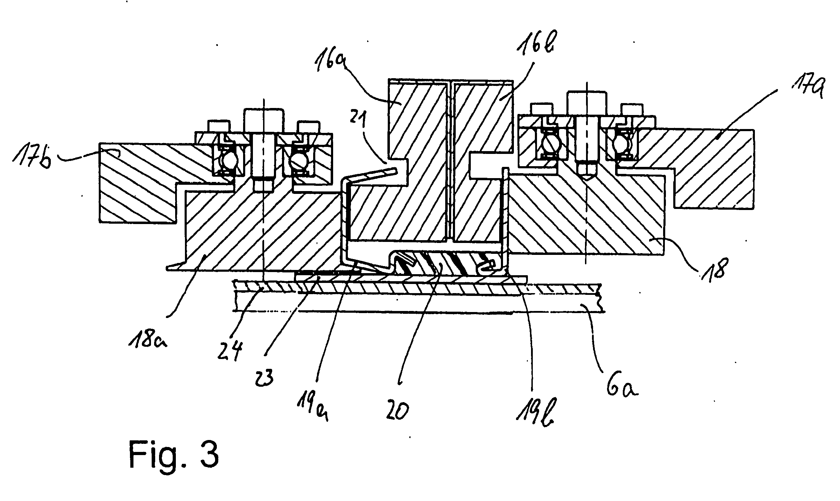

In Fig. 2 sind Teile der Gesamtanlage vergrößert dargestellt: Die allgemein mit 7 bezeichnete Profilführung besteht im Fig. 2 dargestellten Beispiel aus zwei Portalen mit nur angedeutet dargestellten Füßen 14 und einer daran montierten Traverse 15, wobei zwei Portale auf Abstand zueinander angeordnet sind. An den Portalen 14, 15 sind zwei Teillineale 16a und 16b, die ein insgesamt in die Profilhälften eintauchendes Lineal 16 bilden, montiert, wie dies im Schnitt in Fig. 3 näher dargestellt ist. An den Portalfüßen sind einstellbar zwei gegenüberliegende etwa U-förmige Rollenlager 17 befestigt, wobei ein Rollenlager beispielsweise das mit 17a bezeichnete, in Fig. 2 rechte Lager, ortsfest positioniert sein kann, während das mit 17b bezeichnete linke Rollenlager in Richtung auf das andere Lager zu- und von diesem weg bewegbar montiert ist.

In Fig. 2 sind die mit 18 bezeichneten Führungsrollen als Einfachrollen dargestellt, diese Rollen können aber als Profilrollen ausgebildet sein, wie sich dies beispielweise aus Fig. 3 ergibt, um sich den jeweiligen sehr unterschiedlichen Profilformen der Metallprofile anpassen zu können.

In Fig. 3 sind die beiden unterschiedlich gestalteten Metallprofile, die nicht zwingend umschlagssymmetrisch gleich sein müssen, mit 19a und 19b bezeichnet, während der bereits gebildete Kunststoffsteg das Bezugszeichen 20 trägt. Erkennbar können auch die Führungslineale 16a und 16b sehr unterschiedlich gestaltet sein, um sich den jeweiligen Profilformen anpassen zu können, so können Hinterschneidungen vorgesehen sein, in Fig. 3 mit 21 bezeichnet, um etwa abgekröpfte Seitenelemente des Metallprofiles führen zu können. Erkennbar ist auch dort die im Querschnitt gezeichnete Führungsrolle 18a der Profilhälfte 19a angepasst.

In Fig. 2 ist noch dargestellt, dass dem Transportband 6a zunächst aus einem Reservoir 22 ein Klebeband 23 so zugeführt werden kann, dass das Klebeband 23 die Unterseite der zugeführten, noch nicht mit Kunststoff versehenen Metallprofile gegenüber der Bandoberfläche abdichtet, um das Austreten von Kunststoff beim und nach dem Spritzvorgang zu vermeiden. In Fig. 3 ist noch stark vergrößert eine Oberflächenbeschichtung 24, z.B. Teflon, dargestellt, mit der die Oberfläche des Bandes 6a ausgerüstet sein kann, um ein Ankleben bei bestimmten Kunststoffen von vornherein derartig zu verhindern, dass die Zuführung eines zusätzlichen Klebebandes 23 entbehrlich ist.

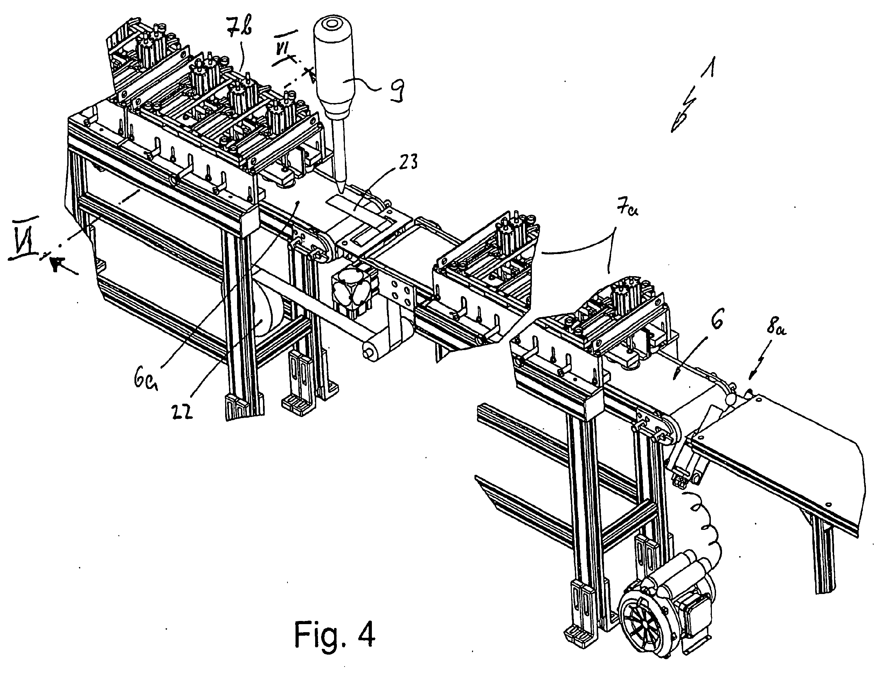

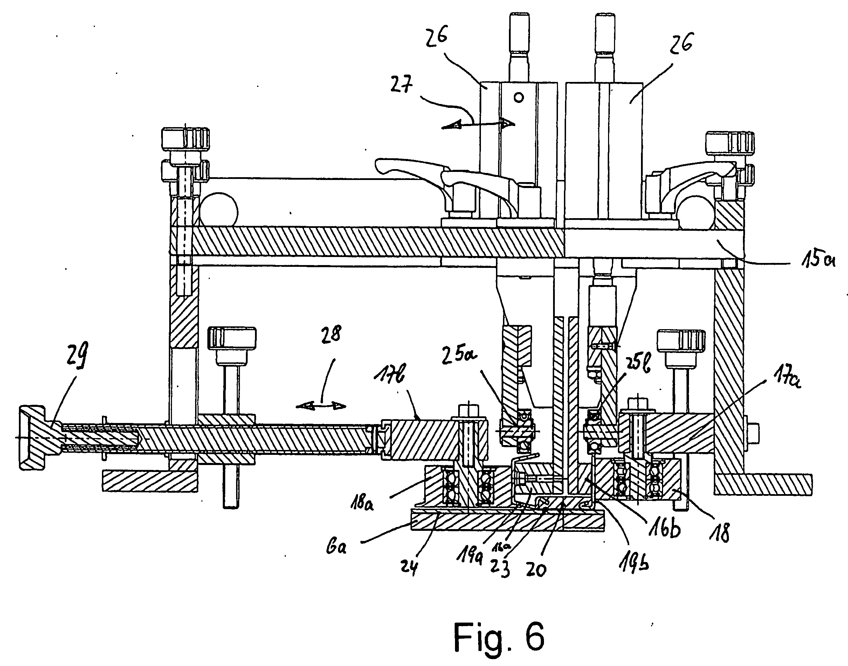

Im Ausführungsbeispiel nach den Fig. 4 und 6 werden, soweit funktionell identisch, die gleichen Bezugszeichen benutzt, wie bei dem ersten Ausführungsbeispiel, d.h. auch hier weist die allgemein mit 1 bezeichnete Gießanlage, deren Gesamtansicht in etwa derjenigen der Fig. 1 entspricht wie dort, Magazine 2 und 3 für die Einzelprofile auf. Die Profile werden mittels eines pneumatischen Schiebers 5 durch die Linealschlitten 4 hindurch geschoben, um von einem ersten Transportriemen 6 erfasst zu werden, wobei bei diesem Ausführungsbeispiel vor dem ersten Transportriemen 6 eine mit 8a bezeichnete Heizeinrichtung positioniert ist, wie z.B. ein Heißluftgeblässe. Mittels diesen Förderbandes 6 werden die Profile in Fig. 4 von rechts kommend durch eine erste Profilführung 7a in ihrer Lage fixiert und dann dem Gießkopf 9 zugeführt, um dann von der zweiten Profilführung 7b auf das zweite Förderband 6a wenigstens so lange gepresst zu werden, bis der eingespritzte Kunststoff ausgehärtet ist.

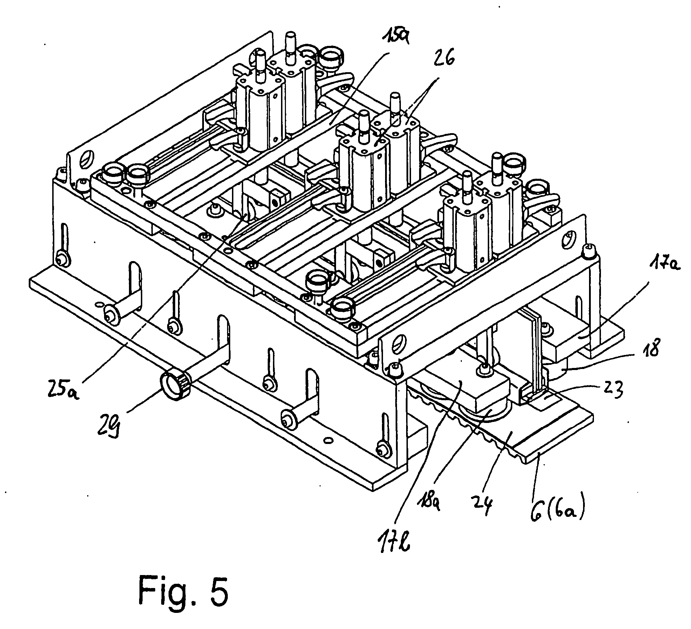

Beim Ausführungsbeispiel nach den Fig. 4 bis 6 werden die Profile 19a und 19b mittels Andruckrollen 25a bzw. 25b am Abheben vom Förderband 6a gehindert. Die Andruckrollen 25a und 25b werden über entsprechende Druckzylinder 26 in Position gehalten. Die Druckzylinder 26 sind in ihrer horizontalen Position relativ zum Förderband 6a je nach zu verarbeiteten Profilen verstellbar (Doppelpfeil 27).

Der Doppelpfeil 28 stellt die verstellmöglichkeit der wenigstens einen Führungsrolle 18a dar. Die Andruckrolle 16b kann in ihrer Position fest montiert sein, allerdings ist sie auswechselbar gegen eine andere Profilrolle am Rollenlager 17a befestigt. Die Handeinstellschraube zur Positionierung der beweglichen Profilrolle 18a ist mit 29 bezeichnet.

In Fig. 4 ist noch eine etwas andere Zuführung des optionalen Klebebandes dargestellt, dieses Band wird mit entsprechenden Umlenkmechanismen von einer Rolle 22 unterhalb des Förderbandes 6a abgezogen.

Natürlich ist das beschriebene Ausführungsbeispiel der Erfindung noch in vielfacher Hinsicht abzuändern, ohne den Grundgedanken zu verlassen, so kann beispielsweise die Anlage im Durchlaufbetrieb betrieben werden, aber auch im reserviblen Betrieb, insbesondere dann, wenn weiter Kunststoffe beispielsweise zur Bildung eines geschlossenen Kastenprofiles einzubringen sind.

## Patentansprüche

1. Gießanlage (1) für thermisch getrennte Metallprofile, mit einer Einzel-Metallprofile (19a,19b) zueinander führenden Einrichtung sowie eine die Einzel-Metallprofile auf Abstand zueinander fördernden und mit wenigstens einer Kunststoffextruderdüse ausgerüsteten Kunststoffgießanlage mit anschließender Auslauf- und Abkühlstrecke,
**gekennzeichnet durch**
wenigstens eine die Einzel-Metallprofile (19a,19b) in der Gießposition haltenden Führungsrollen (18) und Führungslineale (16) aufweisenden, der Kunststoffgießeinrichtung (9) nachgeordneten Profilführung (7).

2. Gießanlage nach Anspruch 1,
**gekennzeichnet durch**
wenigstens eine Profilführung (7) vor der Kunststoffgießeinrichtung (9).

3. Gießanlage nach Anspruch 1 oder 2,
**dadurch gekennzeichnet,**
**dass** die Profilführung (7) mit Traversen (15) ausgerüstet ist, die die Führungslineale (16) einstellbar und die die Führungsrollen (18) aufweisenden Rollenlager (17) verstellbar tragen.

4. Gießanlage nach Anspruch 3,
**dadurch gekennzeichnet,**
**dass** die Rollenlager (17) auswechselbar und über Führungsschlitten in ihrer Position einstellbar an den Traversen (15) befestigt sind.

5. Gießanlage nach Anspruch 3 oder 4,
**dadurch gekennzeichnet,**
**dass** die Führungslineale (16) in den Traversen (15) über Langlochführungen in ihrer Position einstellbar sind.

6. Gießanlage nach einem der vorangehenden Ansprüche,
**dadurch gekennzeichnet,**
**dass** Andruckrollen (25a, 25b) an einem Druckzylinder (26) zur Beaufschlagung der Profile (19a, 19b) an Traversen (15a) vorgesehen sind.

7. Gießanlage nach einem der vorangehenden Ansprüche,
**dadurch gekennzeichnet,**
**dass** wenigstens das einer Kunststoffzuführung (9) zugeordnete Profil-Förderband (6a) mit einer kunststoffabweisenden Oberfläche (24) ausgerüstet ist.

8. Gießanlage nach einem der vorangehenden Ansprüche,
**dadurch gekennzeichnet,**
**dass** in Förderrichtung der Profile vor der Kunststoffextruderdüse (9) im Bereich des Einlaufens in das zugeordnete Förderband eine Zuführeinrichtung für ein Klebeband (23) zur Abdichtung der Profilunterseite vorgesehen ist.

9. Gießanlage nach einem der vorangehenden Ansprüche,
**dadurch gekennzeichnet,**
**dass** vor dem Einlauf in die Kunststoffgießanlage (9) ein Heizelement, wie z.B. ein Heiztunnel (8), oder ein Heißluftgebläse (8a), vorgesehen ist.

10. Gießanlage nach einem der vorangehenden Ansprüche,
**dadurch gekennzeichnet,**
**dass** die Führungslineale (16a, 16b) und die Führungsrollen (18) den Profilformen der Metallprofile (19a, 19b) angepasst sind.

11. Gießanlage nach einem der vorangehenden Ansprüche,
**dadurch gekennzeichnet,**
**dass** Linealschlitten (4) vorgegeben sind, die den Profil formen der Metallprofile (19a, 19b) angepasst sind.

## Claims

1. Casting apparatus (1) for thermally separated metal profiles, having a device which guides individual metal profiles (19a, 19b) towards one another and a plastics casting apparatus with an attached outflow and cooling section, said plastics casting apparatus conveying the individual metal profiles towards one another and at a spacing and being equipped with at least one plastics extrusion die,
**characterised by**
at least one profile guide (7) arranged downstream of the plastics casting device (9), said profile guide (7) comprising guide rollers (18) and gibs (16) which hold the individual metal profiles (19a, 19b) in the casting position.

2. Casting apparatus according to claim 1,
**characterised by**
at least one profile guide (7) in front of the plastics casting device (9).

3. Casting apparatus according to claim 1 or 2,
**characterised in that**
the profile guide (7) is equipped with crosspieces (15) which adjustably support the gibs (16) and movably support the roller bearings (17) comprising the guide rollers (18).

4. Casting apparatus according to claim 3,
**characterised in that**
the roller bearings (17) are attached to the crosspieces (15) so as to be replaceable and adjustable in their position by means of sliding guides.

5. Casting apparatus according to claim 3 or 4,
**characterised in that**
the gibs (16) are adjustable in their position in the crosspieces (15) by means of guide slots.

6. Casting apparatus according to one of the preceding claims,
**characterised in that**
pressure rollers (25a, 25b) are provided on a pressure cylinder (26) on crosspieces (15a), for acting on the profiles (19a, 19b).

7. Casting apparatus according to one of the preceding claims,
**characterised in that**
at least the profile conveyor belt (6a) associated with a plastics feed (9) is provided with a plastics-repellent surface (24).

8. Casting apparatus according to one of the preceding claims,
**characterised in that**
a feed device for an adhesive strip (23) for sealing the underside of the profile is provided in front of the plastics extrusion die (9), in the direction of conveying of the profiles, in the region of entry into the associated conveyor belt.

9. Casting apparatus according to one of the preceding claims,
**characterised in that**
a heating element such as a heating tunnel (8), for example, or a hot air blower (8a), is provided before the entry into the plastics casting apparatus (9).

10. Casting apparatus according to one of the preceding claims,
**characterised in that**
the gibs (16a, 16b) and the guide rollers (18) are matched to the profile shapes of the metal profiles (19a, 19b).

11. Casting apparatus according to one of the preceding claims,
**characterised in that**
gib slides (4) are provided which are matched to the profile shapes of the metal profiles (19a, 19b).

## Revendications

1. Installation de coulée (1) pour profilés métalliques thermiquement isolés, comprenant un dispositif acheminant ensemble des profilés métalliques individuels (19a, 19b) ainsi qu'une installation de coulée de matière plastique transportant les profilés métalliques individuels à distance l'un de l'autre et équipée d'au moins une filière d'extrusion de matière plastique, avec des sections de décharge et de refroidissement qui lui sont raccordées,
**caractérisée par** :
au moins un guide-profilé (7) disposé en aval du dispositif de coulée de matière plastique (9) et présentant des galets de guidage (18) et des rails de guidage (16) maintenant les profilés métalliques individuels (19a, 19b) en position de coulée.

2. Installation de coulée selon la revendication 1, **caractérisée par** :
au moins un guide-profilé (7) en amont du dispositif de coulée de matière plastique (9).

3. Installation de coulée selon la revendication 1 ou 2,
**caractérisée en ce que** :
le guide-profilé (7) est équipé de traverses (15) qui supportent les rails de guidage (16) de manière réglable et les roulements à rouleaux (17) présentant les galets de guidage (18) de manière ajustable.

4. Installation de coulée selon la revendication 3, **caractérisée en ce que** :
les roulements à rouleaux (17) sont fixés sur les traverses (15) de manière interchangeable et réglable en position au moyen de coulisseaux de guidage.

5. Installation de coulée selon la revendication 3 ou 4, **caractérisée en ce que** :
les rails de guidage (16) sont réglables en position dans les traverses (15) via des guides formés de trous allongés.

6. Installation de coulée selon l'une quelconque des revendications précédentes,
**caractérisée en ce que** :
des galets presseurs (25a, 25b) sont prévus sur un vérin (26) pour presser les profilés (19a, 19b) sur les traverses (15a).

7. Installation de coulée selon l'une quelconque des revendications précédentes,
**caractérisée en ce que** :
au moins la bande transporteuse de profilés (6a) affectée à l'acheminement (9) de la matière plastique présente une surface (24) répulsive à la matière plastique.

8. Installation de coulée selon l'une quelconque des revendications précédentes,
**caractérisée en ce que** :
il est prévu dans le sens d'avancement des profilés en amont de la filière de matière plastique (9) dans la zone d'entrée sur la bande transporteuse affectée un dispositif d'acheminement pour une bande adhésive (23) afin d'étancher la partie inférieure des profilés.

9. Installation de coulée selon l'une quelconque des revendications précédentes,
**caractérisée en ce que** :
il est prévu, en amont de l'entrée dans l'installation de coulée de matière plastique (9), un élément chauffant, par exemple, un tunnel de chauffage (8) ou une soufflerie d'air chaud (8a).

10. Installation de coulée selon l'une quelconque des revendications précédentes,
**caractérisée en ce que** :
les rails de guidage (16a, 16b) et les galets de guidage (18) sont adaptés aux formes des profilés métalliques (19a, 19b).

11. Installation de coulée selon l'une quelconque des revendications précédentes,
**caractérisée en ce que** :
il est affecté aux rails des coulisseaux (4) qui sont adaptés aux formes des profilés métalliques (19a, 19b).
